# EUROPEAN PATENT SPECIFICATION

(11) **EP 1 134 818 B1**
(45) Date of publication and mention of the grant of the patent: **17.01.2007**
(21) Application number: 99972790.2
(22) Date of filing: 19.11.1999
(51) Int. Cl.: H01M 2/12, H01M 2/34

(54) **SAFETY DEVICE FOR SEALED BATTERY AND SEALED BATTERY USING IT**
SICHERHEITSVORRICHTUNG FÜR ABGEDICHTETE BATTERIEN UND ABGEDICHTETE BATTERIE BEI DER DIESE VERWENDET WIRD
DISPOSITIF DE SECURITE POUR BATTERIE ETANCHE ET BATTERIE ETANCHE L'UTILISANT

(30) Priority: 19.11.1998 JP 32907198
(43) Date of publication of application: 19.09.2001
(73) Proprietor: Toyo Kohan Co., Ltd., Tokyo 102-8447 (JP)
(72) Inventor: KAWAMURA, H., Toyo Kohan Co., Ltd. Tech. R.Lab., Kudamatsu-shi, Yamaguchi 744-8611 (JP); OKAMOTO, H., Toyo Kohan Co., Ltd. Tech. Res. Lab., Kudamatsu-shi, Yamaguchi 744-8611 (JP); SAIJYO, K., Toyo Kohan Co., Ltd. Tech. Res. Lab., Kudamatsu-shi,Yamaguchi 744-8 611 (JP)
(74) Representative: Vossius & Partner
(86) International application number: PCT/JP1999/006495
(87) International publication number: WO 2000/031810

(56) References cited:
- JP-A- 5 314 959
- JP-A- 6 333 548
- JP-A- 9 199 105

## Description

The present invention relates to a safety device for explosion-proof of a closed battery and a closed battery with the safety device.

Recently, a lithium battery with non-water electrolytic solution and a secondary battery with non-water electrolytic solution for a lithium ion battery have been broadly employed for pocket electronic tools.

Although the secondary battery has a high electro motive force, the secondary battery would explode in case of an increased inner pressure caused by chemical reaction in an electrode member with a positive electrode and a negative electrode installed in an outer container. For example, when a non-water electrolytic solution battery such as a lithium secondary battery is in an overcharge condition or a large amount of electric current is flown into the battery in a short circuit condition caused by a wrong operation, non-water electrolytic solution is solved in the electrode member and gas is produced. When the gas is continuously produced in the outer container and an inner pressure of the outer container increases, the battery would explode in finally.

In order to avoid such an explosion, a closed battery for pocket electronic tools was developed as shown in JP-A-6-338305.

In the conventional art, a positive electrode lid provided at an edge of an outer container comprises a porous metallic plate effected as the innermost lid and connected to a positive electrode of an electrode member through a positive electrode lead, a metallic explosion-proof valve effected as an intermediate lid electrically connected to the porous metallic plate through a central adhered portion, and a metallic cap terminal electrically connected to the metallic explosion-proof valve.

In a structure as described above, when the inner pressure of the battery increases, the porous metallic plate and the metallic explosion-proof valve are electrically isolated by breaking the central adhered portion and gas produced in the inside of the battery is discharged by breaking a part of the metallic explosion-proof valve so as to avoid an explosion of the battery.

However, in a conventional closed battery, some drawbacks to be solved remain. Although a central adhered portion is formed by welding a central portion of a porous metallic plate and a metallic explosion-proof valve in accordance with a spot welding method, it is difficult to weld all the portions uniformly by the spot welding method, and a welding strength of each closed battery is not constant. As a result, an inner pressure of a battery needed for isolating a communication between the porous metallic plate and the metallic explosion-proof valve is not constant. In case of the closed battery, although the inner pressure of the battery has risen to a predetermined isolation pressure, a communication between the porous metallic plate and the metallic explosion-proof valve cannot interrupted. Thus, reliability of a closed battery is damaged in view of safety.

JP-A-9-199105 describes a sealed battery safety device having an intermediate lid with a thin portion provided to be deformed if an inner pressure of the battery increases.

In order to solve the above problems, a purpose of the present invention is to provide a safety device for a closed battery in which a pressure plate and a shield plate can be isolated and a safety of the closed battery can be maintained even if an inner pressure of the battery exceeds a predetermined level, and a closed battery with the safety device.

To accomplish the above purpose, a safety device of a closed battery according to the present invention comprises a positive electrode lid attached at one end of an outer container, said positive electrode lid including a pressure plate effected as the innermost lid and electrically connected to a positive electrode of an electrode member through a positive electrode lead, a shield plate effected as an intermediate lid and electrically connected to said pressure plate through a central contacting portion, and a sealing plate effected as the outermost lid and electrically connected to said shield plate wherein at least one gas flow hole is provided at said pressure plate so as to communicate an internal space of said outer container with a contacting space between said pressure plate and said shield plate a central contacting portion includes a protrusion protrud from a central portion of said pressure plate toward said shield plate and having a first flat contacting surface and a second contacting surface provided at a central portion of said shield plate and contacting with said first flat contacting surface of said protrusion, and said pressure plate and said shield plate are electrically isolated when the inner pressure level of said outer container exceeds a predetermined electric current isolation pressure.

A safety device according to the present invention comprises a positive electrode lid attached at one end of an outer container, said positive electrode lid including a pressure plate effected as the innermost lid and electrically connected to a positive electrode of an electrode member through a positive electrode lead, a shield plate effected as an intermediate lid and electrically connected to said pressure plate through a central contacting portion, and a sealing plate effected as the outermost lid and electrically connected to said shield plate, wherein at least one gas flow hole is provided at said pressure plate so as to communicate an internal portion of said outer container with a contacting space between said pressure plate and said shield plate, a plurality of circular grooves are coaxially formed at a substantially central portion of said shield plate except connecting tab portions alternatively arranged with an angle of 180 ° so as to oppose the adjacent grooves each other; a diameter of said grooves is gradually increasing from an inner side to an outer side and said pressure plate and said shield plate are electrically isolated when an inner pressure level of said outer container exceeds a predetermined electric current isolation pressure.

A safety device according to the present invention comprises a positive electrode lid attached at one end of an outer container, said positive electrode lid including a pressure plate effected as the innermost lid and electrically connected to a positive electrode of a electrode member through a positive electrode lead, a shield plate effected as an intermediate lid and electrically connected to said pressure plate through a central contacting portion, and a sealing plate effected as the outermost lid and electrically connected to said shield plate wherein at last one gas flow hole is provided at said pressure plate so as to communicate an internal space of said outer container with a contacting space between said pressure plate and said shield plate, said central contacting portion includes a protrusion protruding from a central portion of said pressure plate toward said shield plate and having a first flat contacting surface, and a second contacting surface provided at a central portion of said shield plate and contacting with said first flat contacting surface of said protrusion, a plurality of circular grooves are provided coaxially at a portion surrounding said second flat contacting surface of said shield plate except connecting tab portions alternatively arranged with an angle of 180° so as to oppose the adjacent grooves each other, a diameter of said grooves is gradually increasing from an inner side to an outer side, and a valve layer is formed at each of said circular grooves by adhering a metallic foil piece on a side surface of said shield plate confronting with said pressure plate and, when an inner pressure level of said outer container exceeds a predetermined electric isolation pressure, said second flat contacting surface of said shield plate is released or detached from said first flat contacting surface of said pressure plate so as to isolate an electric communication between said pressure plate and said shield plate and, when said pressure level of said outer container exceeds a predetermined layer break pressure, said valve layer is broken. It is preferable that the shield plate and the metallic foil piece are made of a clad metal pilate.

In the safety device, it is preferable that a circular shaped PTC thermister element is provided between the shield plate and the sealing plate.

According to the present invention, a closed battery comprises the above described safety device.

Accordingly, in a normal condition, an electric communication between the pressure plate and the shield plate in a closed space is securely maintained by contacting the first flat contacting surface provided on the protrusion of the pressure plate and the second flat contacting surface of the shield plate. On the other hand, when the inner pressure of the battery rises rapidly and exceeds a predetermined electric current isolation pressure, the shield plate, particularly the second flat contacting surface of the shield plate is released or detached from the first flat contacting surface by producing gas so as to interrupt the electric communication between the pressure plate and the shield plate. Thus, the production of further gas being discharged to an exterior of the battery can be prevented. In such a case, the second flat contacting surface is provided at a central portion of a plurality of circular grooves coaxially and alternatively arranged with an angle of 180, so that the second flat contacting surface can be released from the first contacting surface quickly. Thus, the electric communication between the pressure plate and the shield plate can be quickly interrupted by providing the predetermined electric current isolation pressure. In such a case, the second flat contacting surface is plastically deformed so that the second flat contacting surface is avoided to contact the first flat contacting surface again. If even numbers of circular grooves are formed, the second flat contacting surface can be removed from the first flat contacting surface while both surfaces are maintained in a parallel relation.

Although the electric isolation as described above is performed, if the chemical reaction in the outer container continues and further gas is produced and the inner pressure is further increased and exceeds a predetermined layer break pressure, the gas can be discharged to an exterior of the battery through at least one gas flow hole formed at the pressure plate, the contacting space, at least one circular groove (valve layer) and at least one gas discharging hole by breaking the circular groove (valve layer) formed at the shield plate.

In such a case, the predetermined electric current isolation pressure is preferably 4 to 5 kg/cm² and the predetermined layer breaking pressure is preferably 20 kg/cm².

The above described closed battery has the following characteristics:
① A shield plate and a metallic foil piece may be made of a cladding metal plate for cladding the both. A valve layer may be formed by a portion of the metallic foil piece covering an inner circular groove and an outer circular groove. The thickness of the metal plate is preferably about 50 *µ*m and the thickness of the metallic foil piece is preferably 10 *µ*m.
   For example, as disclosed in JP-A-1-224184 filed by the present inventors, such a clad metal plate is manufactured by a glow discharge method in which a grounded metallic substrate having a contacting surface and a grounded metallic foil piece are effected as one electrode A and the other electrode B supported by an insulator are applied with alternative current 1 to 50 MHz in inactive gas under extreme low pressure of 1 x 10⁻¹ to 1 x 10⁻⁴ Torr. An area of the electrode A exposed with plasma caused by the glow discharge is one third less than an area of the electrode B and etched by a sputter etching method.
② It is preferable that a circular shaped PTC thermister element is provided between a shield plate and a sealing plate. The PTC thermister element controls and reduces electric current while the temperature of a closed battery is increasing so as to avoid exploding caused by excess current.

### Brief Explanation of the Drawings

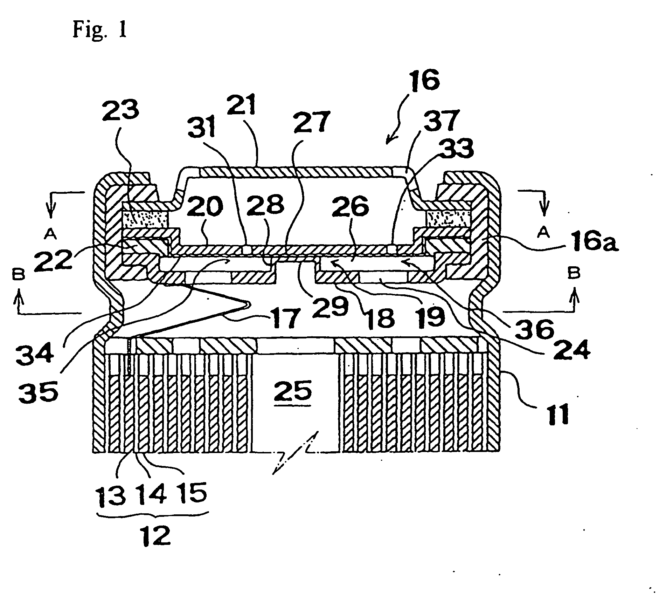

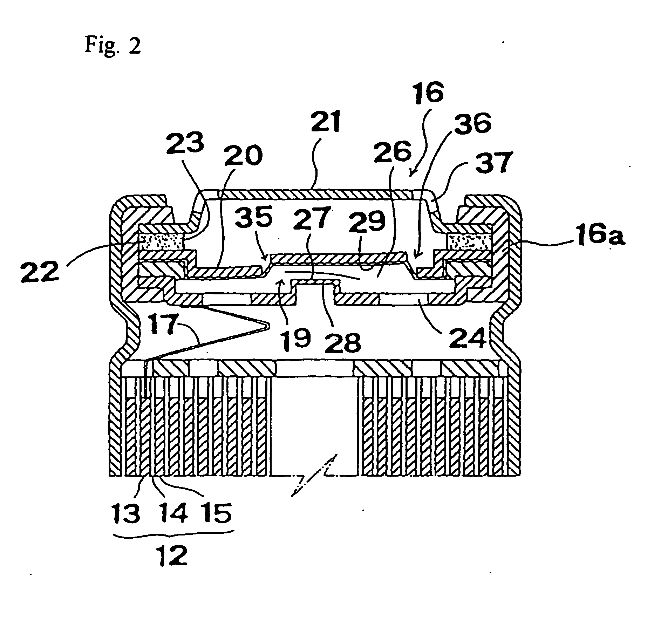

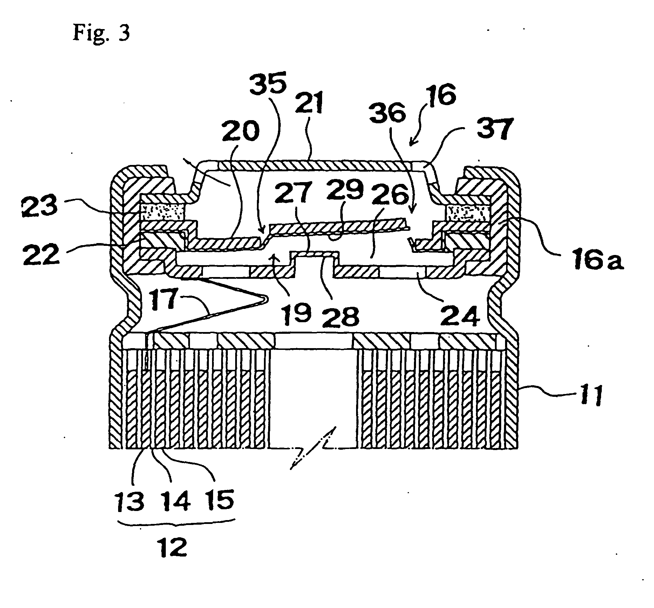

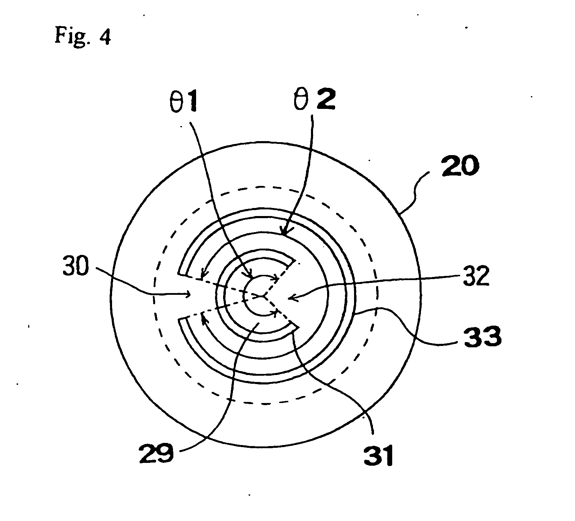

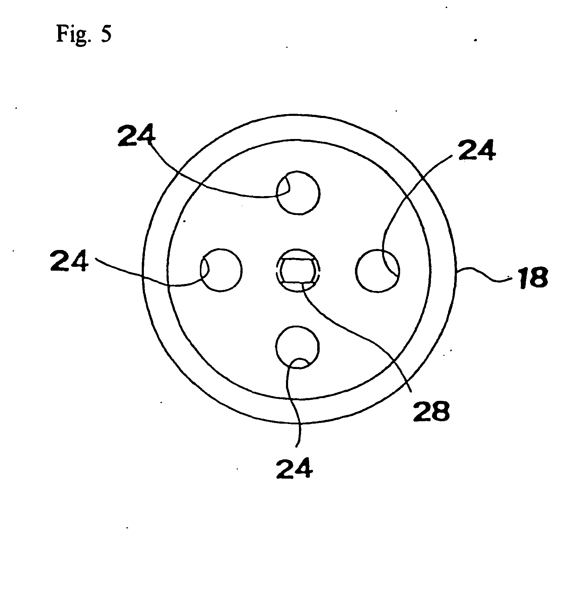

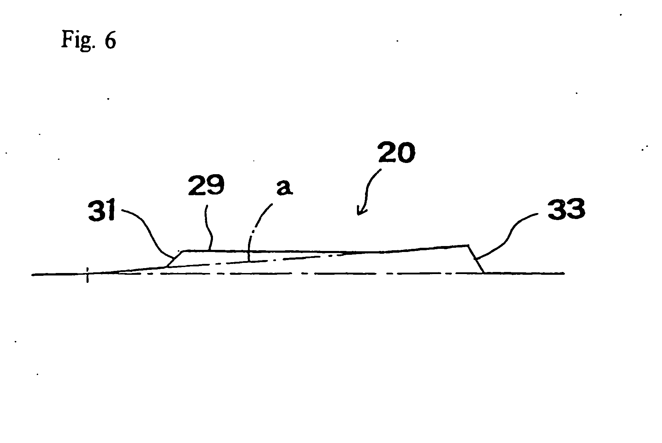

Fig. 1 shows a structure of an embodiment of a safety device of a closed battery according to the present invention in a normal operation condition. Fig. 2 shows a structure of the embodiment of the safety device of the closed battery according to the present invention in a condition in which a pressure plate and a shield plate are detached to shut down an electric communication. Fig. 3 shows a structure of the.embodiment of the safety device of the closed battery according to the present invention in a condition in which a valve layer is broken. Fig. 4 shows a perspective view taken along a line B-B in Fig. 1. Fig. 5 shows a perspective view taken along a line A-A in Fig. 1. Fig. 6 shows a mechanism in which a first central contact portion of the pressure plate is released from a second central contacting portion of the shield plate in a parallel relation.

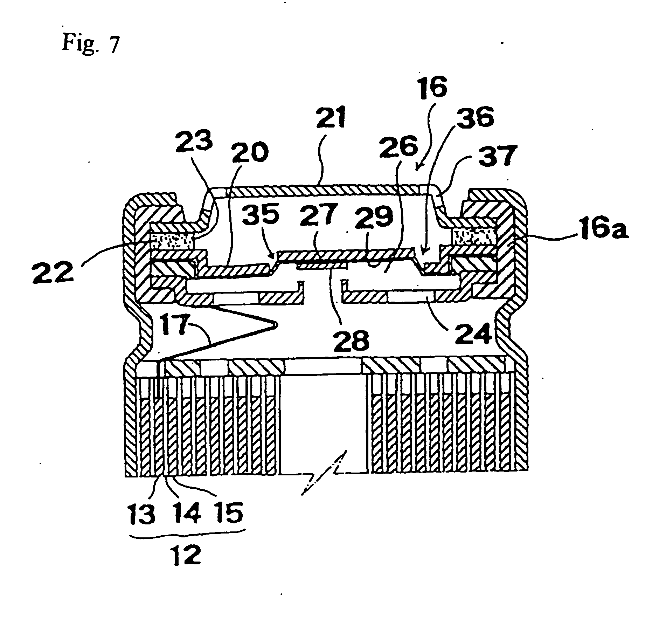

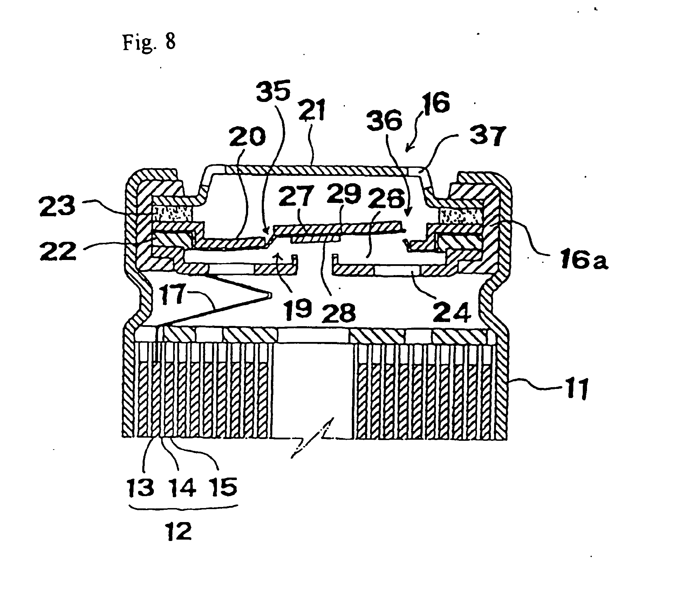

Fig. 7 shows a structure of another embodiment of a safety device of a closed battery according to the present invention in which a pressure plate and a shield plate is electrically isolated. Fig. 8 shows a structure of another embodiment of the safety device of the closed battery according to the present invention in which a valve layer is broken.

Embodiments according to the present invention will be described in detail with reference to the accompanying drawings.

A structure of an embodiment of a safety device of a closed battery according to the present invention is explained with reference to Fig. 1 to Fig. 3.

As shown in Fig. 1 to Fig. 3, an electrode member 12 is installed in an outer container 11 used as a negative terminal. A positive electrode, a separator 14 and a negative electrode 15 are laminated as the electrode and formed into a roll. A safety device of a closed battery used for both an explosion-proof and a terminal is provided at an upper opening portion of the outer container 11. The safety device is actually constituted by a positive electrode lid 16 caulked at the upper opening portion of the outer container 11 through an isolate gasket 16a.

As shown in Fig. 1 to Fig. 3, the positive electrode lid 16 comprises a pressure plate 18 actually effected as the innermost lid and connected to the positive electrode 13 of the electrode member 12 through a positive electrode lead 17, a shield plate 20 effected as an intermediate lid and electrically connected to the pressure plate 18 through a central contact portion 19 and a sealing plate 21 effected as an outermost lid and electrically connected to the shield plate 20. The positive electrode lid 16 comprises a circular isolating plate 22 sandwiched between the pressure plate 18 and the shield plate 20, and a circular PTC thermister element 23 sandwiched between the shield plate 20 and the sealing plate 21.

A structure of the positive electrode lid 16 as described above is explained.

As shown in Fig. 1 to Fig. 3 and Fig. 5, the pressure plate 18 has a plurality of gas flow holes 24. An internal space 25 of the outer container is connected to a contacting space 26 located between the pressure plate 18 and the shield plate 20 through the gas flow holes 24.

As shown in Fig. 1 to Fig. 3, the central contact portion 19 electrically connecting the pressure plate 18 and the shield plate 20 is constituted by a protrusion 28 having a first flat contact surface 27 and protruding from a central portion toward the shield plate 20, and a second flat contact surface 29 located at the central portion of the shield plate 20 and contacting the first flat surface of the protrusion 28.

As shown in Fig. 1 to Fig. 4, at a portion surrounding the second flat contact surface 29 of the shield plate 20, an inner circular groove 31 having a horse shoe shape is formed except a portion for a first connecting tab portion 30. On the other hand, at a portion surrounding the inner circular groove 31, an outer circular groove 33 having a horse shoe shape and the diameter of which is larger than that of the inner circular groove 31, is formed except a portion of a second connecting tab 32 opposing the first connecting tab portion 30 at an angle of 180°. Therein, it is preferable that an angle of circumference θ 1 of the inner circular groove 31 is smaller than an angle of circumference θ 2 of the outer circular groove 33. The angle θ 1 is preferably larger than the angle of the first connecting tab 30.

The horseshoe shaped inner circular groove 31 and outer circular groove 33 may be formed along a circle line, an oval line, other undefined circles and an outline of polygons.

In the embodiment according to the present invention, as shown in Fig. 1 to Fig. 3, a metallic foil piece 34 is attached on a surface of the shield plate 20 at a side confronting the pressure plate 18. Valve layers 35 and 36 are formed by the covering the inner circular groove 31 and the outer circular groove 33 with the metallic foil 34, respectively. The valve layers 35 and 36 are designed to be broken when a pressure exceeding the predetermined rupture pressure (for example, 20 kg/cm²) is applied to the valve layers 35 and 36. When a clad metal plate is formed by cladding a metallic foil piece 34 on the shield plate 20 made of an aluminum metal substrate with a thickness (i.e., 50 µ m), a copper foil piece having a thickness of 10 *µ* m may be used as the metallic foil 34.

In the present invention, the valve films for covering the inner circular groove and the outer circular groove with a metallic foil piece by adhering the metallic foil piece 34 on the surface of the shield plate 20 confronting the pressure plate as described above are not essential. Instead of the inner circular groove 31 and the outer circular groove 33 penetrating into the shield plate 20, notches having a V-shaped cross section may be formed at a part of the shield plate 20 by score processing along a thickness direction. When such a score is formed, adhering a metallic foil piece is unnecessary at a side of the shield plate 20 confronting the pressure plate, since a groove having a thinner wall is provided.

In a relation between the central contacting portion 19 and the shield plate 20 as described above, when the inner pressure of the outer container is increased and exceeds a predetermined electric isolation pressure, while the valve film 36 is plastically deformed as shown in Fig. 3 and Fig. 6, a portion of the shield plate 20 inside of the outer circular groove 33 wholly inclines along one direction so as to form an inclined surface a. On the other hand, the second flat surface 29 deforms the valve layer 35 by simultaneously inclining along an opposite direction with respect to the inclined surface a. As the result, the second flat contact surface 29 is released in parallel with respect to the first flat contacting surface 27 formed by the protrusion 28 of the pressure plate 18. When the pressure of gas reaches a predetermined electric isolation pressure, the shield plate 20 can be released from the pressure plate 18 by providing the inner and outer circular grooves 31 and 33. The second flat contacting surface 29 is released in parallel with respect to the first contacting surface 27. Even if a central portion of the shield plate 20 is slightly risen, the shield plate 20 is completely released from the pressure plate 18. Thus, an electric communication between the pressure plate 18 and the shield plate 20 can be interrupted quickly.

Fig. 2 and Fig. 3 shows a condition in which the electric communication is interrupted by releasing the second flat contacting surface 29 and the first flat contacting surface 27, respectively. When the second flat contacting surface 29 and the first flat contacting surface 27 are adhered (for example, welded), a side surface of the protrusion 28 is torn so as to be broken as shown in Figs. 7 and 8. In order to break the side surface of the protrusion 28, a wall portion of the side surface of the protrusion 28 may be partly thinner so that the thinner wall portion can be easily tom by rising the shield plate 20 so as to interrupt the electric communication.

In the following, an operation of the safety device of the closed battery as described above is described with reference to Fig. 1 to Fig. 3.

In the closed battery, if a large amount of electric current is flown in an overcharge condition, highly corrosive gas is produced in the outer container 11 by flowing a large amount of the electric current and the pressure in the outer container 11 is increased. If this condition is maintained, the closed battery would explode. However, in the embodiment, when the pressure of the gas in the outer container 11 exceeds the predetermined electric isolation pressure, the gas is introduced into the contacting space 26 and then the second flat contacting surface 29 of the shield plate 20 is quickly released from the first flat contacting surface 27 formed on the protrusion 28 of the pressure plate 20 so as to interrupt the electric communication between the pressure plate 18 and the shield plate 20. Accordingly, it is prevented that further gas is produced so that an explosion of the outer container 11 caused by the increased inner pressure of the outer container 11 can be avoided securely. In addition, the valve layers 35 and 36 have not been broken so that gas harmful against a human body can be prevented from flowing to the exterior of the battery and an environment can be prevented from being contaminated.

Even if the chemical reaction is still proceeding in the outer container 11, the inner pressure exceeds the predetermined layer breaking pressure due to the production of gas although the electric communication is interrupted, and one or both of the valve layers 35 and 36 would break as shown in Fig. 3 so that the gas can be quickly discharged to the exterior from the contacting space 26 through a space between the shield plate 20 and the sealing plate 21 and the gas flow holes 37 so as to avoid for exploding of the closed battery securely.

As described above, the safety device for a closed battery according to the present invention accomplishes the electric isolation and discharging of gas to the exterior of the battery so as to avoid exploding of the closed battery securely. The gas is discharged to the exterior in an emergency case. Thus, a baneful influence to a human body and an environment can be controlled to be as small as possible.

As shown in Fig. 1 to Fig. 3, in the embodiment according to the present invention, the PTC thermister element 23 in a circular plate shape is provided between the shield plate 20 and the sealing plate 21 so that the thermister element 23 can act to lower electric current when a temperature of the safety device of the closed battery is increased by producing gas. Thus, an explosion caused by excess current can be prevented.

In the embodiment according to the present invention as described above, although two circular grooves 31 and 33 are formed at a portion surrounding the second flat contacting surface 29, the number of the grooves may be three and more (without regard to even number or odd number).

As described above, in the safety device of the closed battery according to the present invention, when normal electric current flows, a closed battery can be operated normally by contacting a pressure plate and a shield plate in a sealed space in a pressure-tight condition. When an excess current flows, a second flat contacting surface formed at a central portion of a plurality of circular grooves coaxially arranged is quickly released from a first flat contacting surface formed on a protrusion at a central portion of a pressure plate by utilizing the pressure of gas so as to interrupt an electric communication between the pressure plate and the shield plate rapidly. In addition, when the gas is further produced, a valve layer is quickly broken so as to discharge the gas. Thus, an electric isolation and discharging the gas to an exterior of the battery can be performed in order to avoid exploding of the closed battery. Baneful influences against a human body and an environment can be controlled to be as small as possible since a discharge of the gas to the exterior of the battery is in an emergency case.

In the safety device for a closed battery according to the present invention, cladding a metallic foil piece on a metallic substrate on which inner- and outer- circular grooves are formed is provided so that a shield plate with a valve layer securely actuated by the predetermined layer break pressure can be manufactured economically.

In addition, by providing a PTC thermister element in a circular shape between a shield plate and a sealing plate, the electric current is controlled to be reduced. Thereby, an explosion caused by an excess current can also be prevented.

By providing a safety device for a closed battery according to the present invention, a high safety closed battery with high performance can be manufactured economically.

## Claims

1. A safety device of a closed battery comprising a positive electrode lid (16) attached at one end of an outer container (11), said positive electrode lid (16) including:
a pressure plate (18) effected as innermost lid and electrically connected to a positive electrode (13) of an electrode member (12) through a positive electrode lead (17),
a shield plate (20) comprising a plurality of grooves (31, 33) which are covered by a metallic foil (34), said shield plate (20) is effected as an intermediate lid and electrically connected to said pressure plate (18) through a central contacting portion (19), and
a sealing plate (21) effected as the outermost lid and electrically connected to the shield plate (20),
wherein at least one gas flow hole (24) is provided at said pressure plate (18) so as to communicate an internal space (25) of said outer container (11) with the contacting space (26) between said pressure plate (18) and the shield plate (20),
said central contacting portion (19) includes a protrusion (28) protruding from a central portion of said pressure plate (18) toward said shield plate (20) and having a first flat contacting surface (27), and a second contacting surface (29) provided at a central portion of said shield plate (20) and contacting with the first flat contacting surface (27) of said protrusion (28) and
said pressure plate (18) and said shield plate (20) are electrically isolated when an inner pressure level of said outer container (11) exceeds a predetermined electric current isolation pressure.

2. A safety device according to claim 1, wherein
a plurality of circular grooves (31, 33) are coaxially formed at a substantially central portion of said shield plate (20) except connecting tap portions (30,32) alternatively arranged with an angle of 180° so as to oppose the adjacent grooves (31, 33) each other,
a diameter of said grooves (31, 33) is gradually increasing from an inner side to an outer side and
said pressure plate (18) and said shield plate (20) are electrically isolated when an inner pressure level of said outer container (11) exceeds a predetermined electric current isolation pressure.

3. A safety device according to claim 1 or 2, wherein
a plurality of circular grooves (31, 33) are provided coaxially at a portion surrounding said second flat contacting surface (29) of said shield plate (20) except connecting tap portions (30, 32) alternatively arranged with an angle of 180° so as to oppose the adjacent grooves (31, 33) each other,
a diameter of said grooves (31, 33) is gradually increasing from an inner side to an outer side, and
a valve layer (35, 36) is formed at each of said circular grooves (31, 33) by adhering a metallic foil piece (34) on a side surface of said shield plate (20) confronting with said pressure plate (18), and
when an inner pressure level of said outer container (11) exceeds a predetermined electric isolation pressure, said second flat contacting surface (29) of said shield plate (20) is released from said first flat contacting surface (27) of said pressure plate (18) so as to isolate an electric communication between the pressure plate (18) and said shield plate (20) and
when said pressure level of said outer container (11) exceeds a predetermined layer break pressure, each of said valve layers (35, 36) is broken.

4. A safety device according to any one of claims 1 to 3, wherein said shield plate (20) and said metallic foil piece (34) are formed by clad metallic plates, respectively.

5. A safety device according to any one of claims 1 to 4, wherein a PTC thermister element (23) in a circular shape is provided between the shield plate (20) and said sealing plate (21).

6. A closed battery comprising a safety device recited in any one of claims 1 to 5.

## Patentansprüche

1. Sicherheitsvorrichtung einer abgedichteten Batterie mit einem positiven Elektrodendeckel (16), der an einem Ende eines äußeren Behälters (11) befestigt ist, wobei der positive Elektrodendeckel (16) aufweist:
eine Druckplatte (18), die als innerster Deckel ausgeführt ist und mit einer positiven. Elektrode (13) eines Elektrodenteils (12) über eine positive Elektrodenleitung (17) elektrisch verbunden ist,
eine Schutzplatte (20) mit mehreren Nuten (31, 33), die mit einer Metallfolie (34) überzogen sind, wobei die Schutzplatte (20) als ein Zwischendeckel ausgeführt ist und mit der Druckplatte (18) über einen Mittelkontaktabschnitt (19) elektrisch verbunden ist, und
eine Dichtplatte (21), die als der äußerste Deckel ausgeführt ist und mit der Schutzplatte (20) elektrisch verbunden ist,
wobei zumindest ein Gasstromloch (24) in der Druckplatte (18) vorgesehen ist, um einen Innenraum (25) des äußeren Behälters (11) mit dem Kontaktraum (26) zwischen der Druckplatte (18) und der Schutzplatte (20) zu verbinden,
wobei der Mittelkontaktabschnitt (19) einen Vorsprung (28), der von einem Mittelabschnitt der Druckplatte (18) in Richtung der Schutzplatte (20) vorsteht und eine erste ebene Kontaktfläche (27) hat, und eine zweite Kontaktfläche (29) aufweist, die in einem Mittelabschnitt der Schutzplatte (20) vorgesehen ist und mit der ersten ebenen Kontaktfläche (27) des Vorsprungs (28) Kontakt hat, und
wobei die Druckplatte (18) und die Schutzplatte (20) elektrisch getrennt werden, wenn ein Innendruckpegel des äußeren Behälters (11) einen vorbestimmten Druck zum Abschalten des elektrischen Stroms überschreitet.

2. Sicherheitsvorrichtung nach Anspruch 1, wobei
mehrere Kreisnuten (31, 33) in einem im wesentlichen mittleren Abschnitt der Schutzplatte (20) koaxial ausgebildet sind, mit Ausnahme von Kontaktfahnenabschnitten (30, 32), die alternierend mit einem Winkel von 180° so angeordnet sind, daß sie den benachbarten Nuten (31, 33) jeweils gegenüberliegen,
ein Durchmesser der Nuten (31, 33) von einer Innenseite zu einer Außenseite schrittweise größer wird, und
die Druckplatte (18) und die Schutzplatte (20) elektrisch getrennt sind, wenn ein Innendruckpegel des äußeren Behälters (11) einen vorbestimmten Druck zum Abschalten des elektrischen Stroms überschreitet.

3. Sicherheitsvorrichtung nach Anspruch 1 oder 2, wobei
mehrere. Kreisnuten (31, 33) in einem Abschnitt koaxial vorgesehen sind, der die zweite ebene Kontaktfläche (29) der Schutzplatte (20) umgibt, mit Ausnahme von Kontaktfahnenabschnitten (30, 32), die alternierend mit einem Winkel von 180° so angeordnet sind, daß sie den benachbarten Nuten (31, 33) jeweils gegenüberliegen,
ein Durchmesser der Nuten (31, 33) von einer Innenseite zu einer Außenseite schrittweise größer wird, und
eine Ventilschicht (35, 36) an jeder der Kreisnuten (31, 33) durch Haftbefestigung eines Metallfolienstücks (34) auf einer Seitenfläche der Schutzplatte (20), die der Druckplatte (18) gegenüberliegt, ausgebildet ist, und
wenn ein Innendruckpegel des äußeren Behälters (11) einen vorbestimmten Druck zum elektrischen Abschalten überschreitet, die zweite ebene Kontaktfläche (29) der Schutzplatte (20) von der ersten ebenen Kontaktfläche (27) der Druckplatte (18) gelöst wird, um eine elektrische Verbindung zwischen der Druckplatte (18) und der Schutzplatte (20) zu trennen, und
wenn der Druckpegel des äußeren Behälters (11) einen vorbestimmten Schichtzerstörungsdruck überschreitet, jede der Ventilschichten (35, 36) zerstört wird.

4. Sicherheitsvorrichtung nach einem der Ansprüche 1 bis 3, wobei die Schutzplatte (20) und das Metallfolienstück (34) jeweils aus Plattierungsblechen bestehen.

5. Sicherheitsvorrichtung nach einem der Ansprüche 1 bis 4, wobei ein PTC-Thermistorelement (23) kreisförmig zwischen der Schutzplatte (20) und der Dichtplatte (21) vorgesehen ist.

6. Abgedichtete Batterie mit einer Sicherheitsvorrichtung nach einem der Ansprüche 1 bis 5.

## Revendications

1. Dispositif de sécurité d'une batterie étanche comprenant :
un couvercle (16) d'électrode positive, attaché à une extrémité d'un conteneur extérieur (11), ledit couvercle (16) d'électrode positive comprenant :
une plaque de pression (18) formant le couvercle situé le plus à l'intérieur et reliée électriquement à une électrode positive (13) d'une unité d'électrodes (12) par un fil de sortie (17) d'électrode positive,
une plaque écran (20) comprenant une pluralité de rainures (31, 33) qui sont couvertes par une feuille métallique (34), ladite plaque écran (20) formant un couvercle intermédiaire et connectée électriquement à ladite plaque de pression (18) par une partie de contact centrale (19), et
une plaque d'étanchéité (21) formant le couvercle situé le plus à l'extérieur et connectée électriquement à ladite plaque écran (20),
dans lequel au moins un orifice d'écoulement de gaz (24) est prévu dans ladite plaque de pression (18) afin de mettre en communication un espace intérieur (25) dudit conteneur extérieur (11) avec l'espace de contact (26) entre ladite plaque de pression (18) et ladite plaque écran (20),
ladite partie de contact centrale (19) comprend une protubérance (28) faisant saillie d'une partie centrale de ladite plaque de pression (18) en direction de ladite plaque écran (20) et ayant une première surface de contact plate (27), et une deuxième surface de contact (29) prévue dans la partie centrale de ladite plaque écran (20) et entrant en contact avec ladite première surface de contact plate (27) de ladite protubérance (28), et
ladite plaque de pression (18) et ladite plaque écran (20) sont électriquement isolées quand un niveau de pression interne dudit conteneur extérieur (11) dépasse une pression d'isolation du courant électrique prédéterminée.

2. Dispositif de sécurité selon la revendication 1, dans lequel:
une pluralité de rainures circulaires (31, 33) sont formées coaxialement dans une partie sensiblement centrale de ladite plaque écran (20), exception faite de parties pattes de connexion (30, 32) disposées alternativement à un angle de 180 ° de manière à opposer les rainures (31, 33) adjacentes les unes aux autres, un diamètre desdites rainures (31, 33) augmentant graduellement à partir du côté intérieur vers le côté extérieur, et
ladite plaque de pression (18) et ladite plaque écran (20) sont électriquement isolées quand un niveau de pression interne dudit conteneur extérieur (11) dépasse une pression d'isolation du courant électrique prédéterminée.

3. Dispositif de sécurité selon la revendication 1 ou 2, dans lequel
une pluralité de rainures circulaires (31, 33) sont prévues coaxialement dans une partie entourant ladite deuxième surface de contact plate (29) de ladite plaque écran (20), exception faite de parties pattes de connexion (30, 32) disposées alternativement à un angle de 180° de manière à opposer les rainures (31, 33) adjacentes les unes aux autres,
un diamètre desdites rainures (31, 33) augmentant graduellement à partir du côté intérieur vers le côté extérieur, et
une membrane de soupape (35, 36) est formée au niveau de chacune desdites rainures circulaires (31, 33) en collant un morceau de feuille métallique (34) sur une surface latérale de ladite plaque écran (20) faisant face à ladite plaque de pression (18), et
quand un niveau de pression interne dudit conteneur extérieur (11) dépasse une pression d'isolation du courant électrique prédéterminée, ladite deuxième surface de contact plate (29) de ladite plaque écran (20) est dégagée de ladite première surface de contact plate (27) de ladite plaque de pression (18) de manière à isoler une communication électrique entre ladite plaque de pression (18) et ladite plaque écran (20), et
quand ledit niveau de pression dudit conteneur extérieur (11) dépasse une pression de rupture de la membrane prédéterminée, chaque desdites membranes de soupape (35, 36) est rompue.

4. Dispositif de sécurité selon une quelconque des revendications 1 à 3, dans lequel ladite plaque écran (20) et ledit morceau de feuille métallique (34) sont formés respectivement par des tôles métalliques plaquées.

5. Dispositif de sécurité selon une quelconque des revendications 1 à 4, dans lequel une thermistance CTP (23) de forme circulaire est prévue entre ladite plaque écran (20) et ladite plaque d'étanchéité (21).

6. Batterie étanche comprenant un dispositif de sécurité tel qu'exposé dans une des revendications 1 à 5.
